(19)

Europäisches
Patentamt
European
Patent Office
Office européen
des brevets

(11) **EP 3 352 096 A1**

(12) **EUROPEAN PATENT APPLICATION**

(43) Date of publication:
**25.07.2018 Bulletin 2018/30**

(51) Int Cl.:
**G06F 17/30** (2006.01)

(21) Application number: **17163404.1**

(22) Date of filing: **28.03.2017**

| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD**<br><br>(30) Priority: **18.01.2017 IN 201741002005**<br><br>(71) Applicant: **Wipro Limited**<br>**560 035 Karnataka (IN)** | (72) Inventors:<br>• **NARASIMHA, Chetan Yadati**<br>**560054 Bangalore (IN)**<br>• **NARASIMHAIAH, SomaShekar Bettahalli**<br>**Bangalore (IN)**<br>• **SRINIVASAN, Arul**<br>**637102 Tamil Nadu (IN)**<br><br>(74) Representative: **Finnegan Europe LLP**<br>**16 Old Bailey**<br>**London EC4M 7EG (GB)** |

(54) **SYSTEMS AND METHODS FOR IMPROVING ACCURACY OF CLASSIFICATION-BASED TEXT DATA PROCESSING**

(57)    An application server for improving the data diversity of a corpus of training data for training a classifier is provided. The application server comprises one or more hardware processors configured to execute a set of instructions to: obtain a first set of text data; determining a set of phrases from the first set of text data; training the classifier using the set of phrases; classify the set of phrases using the trained classifier; and determine a level of accuracy of a classification by the trained classifier with the set of parameters. The application server may retrain the classifier on a second set of text data, or update a set of rules associated with the classifier, in response to determining that the level of accuracy is below a predetermined threshold.

FIG. 3

EP 3 352 096 A1

## Description

Technical Field

This disclosure relates generally to data processing, and more particularly, to methods and systems for improving the accuracy of classification-based text data processing.

Background

Classification-based text data processing can be used to improve a wide variety of technology fields including, for example, search technologies, system failure diagnosis and repair, etc. As an illustrative example, after a user inputs a query string ('find me the best machine_) to a system, the system can extract text information from the query string (e.g., 'best machine_). The system can then classify the query string based on the extracted information. The purpose of the classification can be to determine a category of semantic meaning or user intent based on the query string, and provide a set of search results (e.g., a list of uniform resource locators (URL)) based on the classification result. As another example, classification can be performed on a log file containing error messages from a computer network system. For example, after receiving an error message 'Server x1 not responding due to network failure,_a system can extract text information from the error message (e.g., 'Server x1_, 'not responding_, 'network failure_), detect and classify a failure event from the error message, and provide a solution to the failure event based on the classification result.

A supervised classification software algorithm can be used to perform the aforementioned classifications. With a supervised classification algorithm, a set of training data can be provided to configure a machine (e.g., a computer) that executes the classification algorithm to meet a certain classification specification. The training data can include a set (corpus) of training examples. For a corpus of text training examples, each training examples comprises text (e.g. a phrase) and a desired classification. During the training process, the supervised classification algorithm uses a set of rules and parameters to classify the training examples. The output of the supervised classification algorithm is compared with the desired classification of the training examples. The configuration parameters of the machine that performs the supervised classification algorithm can be modified to generate the desired classification.

The training data can be determined based on, for example, a history of user habits, user attributes, a history of diagnosis and repair, etc. Using the search engine example above, based on a set of training data developed based on a history of users search habits, as well as the users occupation, a system may determine the phrase 'best machine_ should be classified into the technology field of computer, rather than the technology field of a fax machine. Also, referring to the diagnosis example above, based on a set of training data developed based on a history of diagnosis and repair of a particular network system, a system may determine the phrase 'network failure_ should be classified into a symptom group including congestion of network switches and routers, rather than power failure.

The inventors here have recognized several potential technical problems that may arise with such supervised classification algorithms, which can lead to, for example, inaccurate classification result, as explained below.

One potential technical problem is that the corpus does not contain examples for each candidate category the input data can be classified into. This can limit the scope of input data that can be correctly classified by the classification algorithm. A supervised classification algorithm that is trained using such a corpus may not be able to classify input data related to a category that does not have examples in the corpus. Another potential technical problem is that the corpus does not include sufficiently diverse examples in some (if not all) of the categories, even if the corpus does contain examples for each candidate category. In both cases, incorrect classification may result. A wrong action (e.g., a wrong corrective action based on faulty diagnosis result) may also be performed as a result.

## SUMMARY

Embodiments of the present disclosure present technological improvements as solutions to one or more of the above-mentioned technical problems recognized by the inventors. For example, in one embodiment, an application server is provided. The application server comprises one or more memory units that stores a set of instructions, and one or more hardware processors configured to execute the set of instructions to: obtain a set of phrases; train the classifier using the set of phrases to obtain a set of parameters of a classifier; classify the set of phrases using the trained classifier into one or more classes; and determine a level of accuracy of the classifying by the trained classifier. The application server may also determine to obtain a second set of text data to retrain the classifier, or update the set of rules associated with the classifier, in response to determining that the level of accuracy is below a predetermined threshold.

In another embodiment, a method of facilitating acquisition of information related to a set of text data is provided. The method comprises: obtaining, by an application server, a first set of text data; determining, by the application server, a set of phrases from the first set of text data; training, by the application server, a classifier using the set of phrases, wherein the classifier is associated with a set of rules; classifying, by the application server using the trained classifier, the set of phrases into one or more classes; and determining, by the application server, a level of accuracy of the classifying. The method may further comprises retraining, by the application server, the classifier based on a second set of text data, or updating the set of rules associated with the classifier, in response to determining that the level of accuracy is below a predetermined threshold.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles.

FIG. 1 is a block diagram of an exemplary corpus of training examples for training a supervised classification algorithm according to some embodiments of the present disclosure.

FIGs. 2A-2D illustrate an exemplary system for improving the data diversity of a corpus for a supervised classification algorithm according to some embodiments of the present disclosure.

FIG. 3 is a flow diagram illustrating an exemplary method for improving the data diversity of a corpus for a supervised classification algorithm according to some embodiments of the present disclosure.

FIG. 4 is a flow diagram illustrating an exemplary procedure for determining the example with maximum similarity and a maximum similarity score for each example of a corpus for a supervised classification algorithm according to some embodiments of the present disclosure.

FIG. 5 is a flow diagram illustrating an exemplary procedure for creating a similarity graph for a corpus and determining similarity sets for every example of the corpus in accordance with some embodiments of the present disclosure.

FIG. 6 is an exemplary server and network environment in which embodiments of the present disclosure can be used.

## DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

Illustrative embodiments of the present disclosure are listed below. In one embodiment an application server is provided. The application server comprises one or more hardware processors and one or more memory units storing instructions executable by the one or more hardware processors for obtaining, by an application server, a first set of text data; determining, by the application server, a set of phrases from the first set of text data; determining, by the application server, a set of parameters of a classifier using the set of phrases, wherein the classifier is associated with a set of rules; classifying, by the application server, using the classifier with the determined set of parameters, the set of phrases using the classifier into one or more classes; determining, by the application server, a level of accuracy of the classifying; and performing, by the application server, at least one of updating the set of parameters based on a second set of text data, or updating the set of rules in response to determining that the level of accuracy is below a predetermined threshold.

The embodiments described herein provide methods and systems for improving accuracy of data processing. According to embodiments of the present disclosure, a system can determine a set of scores for a corpus of training data to be used to train a supervised-classification algorithm. The scores can reflect the diversity of examples included in the corpus, and/or a classification accuracy. If the scores are below predetermined thresholds, the system can also configure the supervised-classification algorithm, and/or to broaden the data diversity of examples in the corpus, until the predetermined thresholds are reached. As a result, the data diversity of examples of a corpus can be expanded, which can improve the classification accuracy of the supervised classification algorithm trained using the corpus.

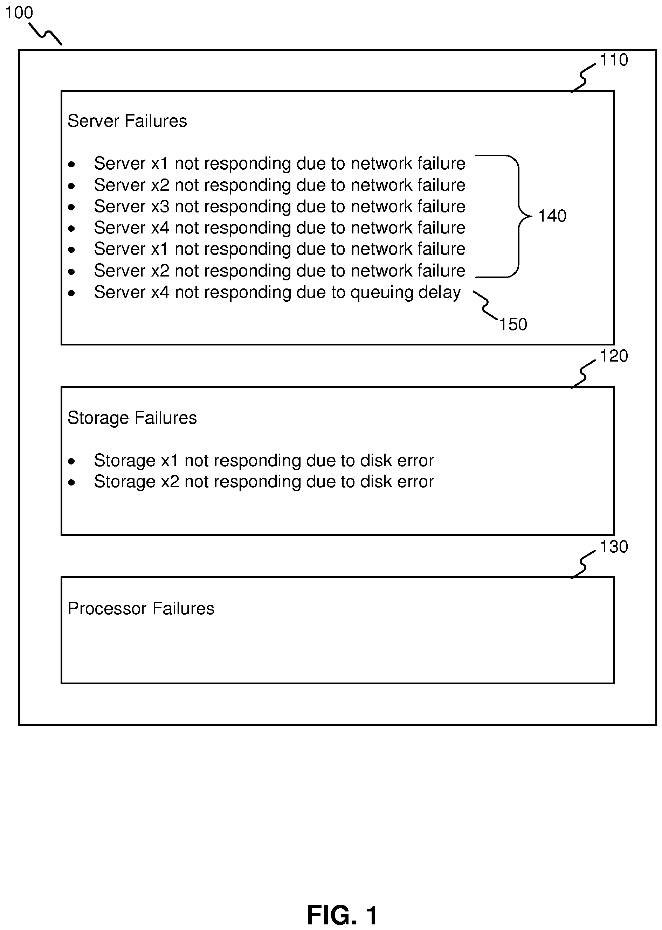

FIG. 1 illustrates a training example 100 that can be processed by embodiments of the present disclosure. Referring to FIG. 1, there can be three categories of errors in an exemplary network environment: server failures 110, storage failures 120 and processor failures 130. The corpus of training example 100 can include seven training examples for category 110, two training examples for category 120 and no training examples for category 130. Corpus 100 may therefore contain too little information for category 130 compared with category 110 and category 120. In this case, a supervised classification algorithm that is trained using corpus 100 may not be able to classify an error message related to processor failures into category 130. As a result, a wrong corrective action may be performed, and the error can also remain unresolved.

Moreover, in some cases, a training example may also be determined as not including sufficiently diverse examples. In this case, the scope of input data that can be correctly classified may still be limited. Referring back to the example of FIG. 1, category 110 includes six examples 140. The first five examples, although not duplicates, carry very similar information to each other - that is, all of them indicate a particular server not responding due to network failure. A supervised classification algorithm that is trained using corpus 100 may, upon receiving a message 'Server x6 not responding due to network failure,_ may correctly classify the message as related to a server failure error and provide a solution that works for the first five examples of examples 140. However, the supervised classification algorithm may have difficulty classifying an error message that does not include similar information as these five examples. For example, if the system receives a message 'Server x6 not responding due to insufficient processor speed,_ a supervised classification algorithm that is trained using corpus 100 may have difficulty classifying such a message and determining a solution, since none of the examples in the corpus includes an example where the server does not respond due to insufficient processor speed. As a result, a wrong corrective action may also be performed, and the error can also remain unresolved.

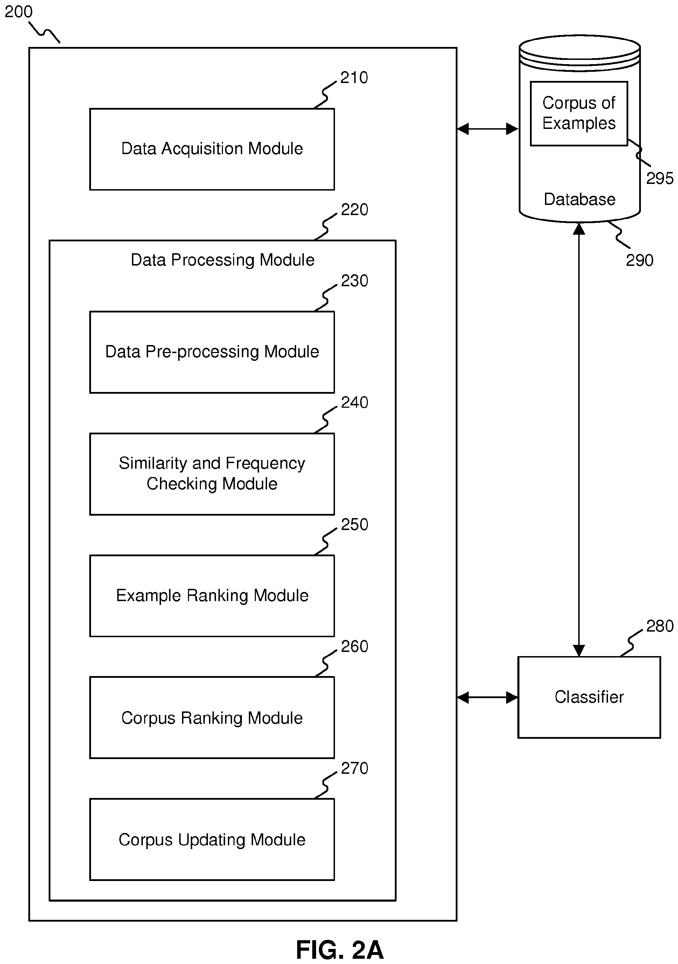

**FIG. 2A** illustrates a functional block diagram of an exemplary system 200, such as the application server for improving the data diversity of a corpus, such as training example 100 of **FIG. 1** for a supervised classification algorithm, according to some embodiments of the present disclosure. System 200 may include a data acquisition module 210 and a data processing module 220. Data processing module 220 may include a data pre-processing module 230, a similarity and frequency checking module 240, an example ranking module 250, a corpus ranking module 260, and an corpus updating module 270. System 200 may be communicatively coupled with a classifier apparatus 280 (e.g., a computer that executes the supervised classification algorithm), and a database 290.

For the purposes of this disclosure, 'modules_ may be implemented in software, hardware, firmware, a mix of any of those, or the like. For example, if the disclosed 'modules_ are implemented in software, they may be stored in a memory associated with system 200. Processors, I/O devices, and memory devices may be used to perform processes to implement and facilitate operations of the modules. Thus, the modules may include code instructions executable by one or more processors, alone or in various combinations with other modules disclosed in this or other embodiments. If the disclosed 'modules_ are implemented in hardware, they may comprise an embedded system or other dedicated hardware configured by machine code, assembly code, or the like to interact with other modules to perform functions consistent with disclosed embodiments.

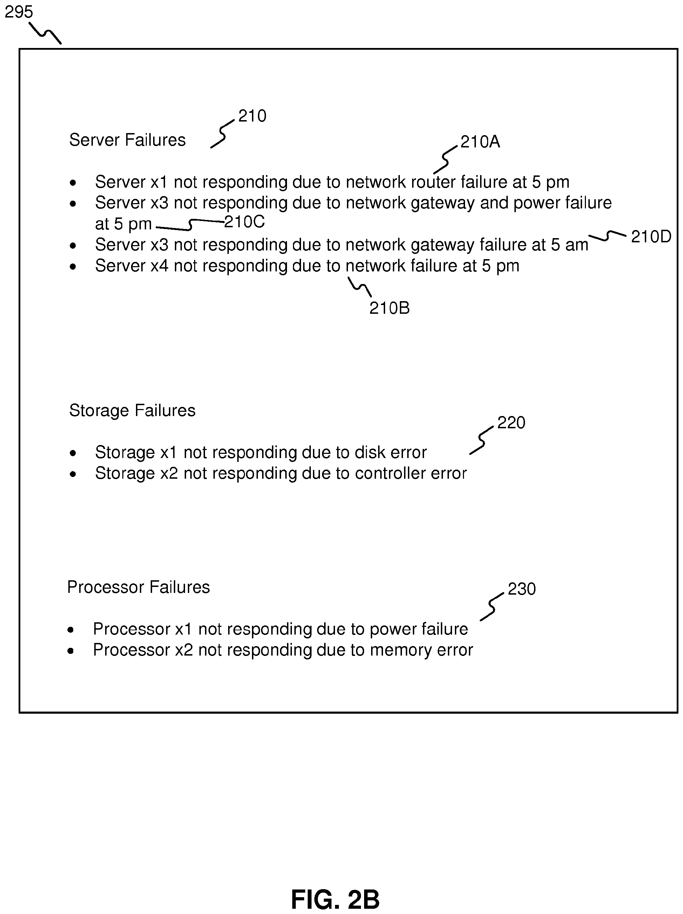

In some embodiments, data acquisition module 210 can, under the instruction of data processing module 220, acquire a set of text data as a corpus for training classifier 280. For example, data acquisition module 210 may acquire corpus 295 from database 290. Corpus 295 may include a set of text data that represent examples for different categories of input data to be processed by classifier 280. **FIG. 2B** provides an example of corpus 295. Referring to **FIG. 2B,** corpus 295 may include multiple examples 210, 220 and 230 of input data. The data in corpus 295 can be generated from other sources not shown in **FIG. 2A.** For example, the data in corpus 295 can be generated by a computer network diagnosis system that keeps a history of the error messages it has received from a computer network. In some embodiments, the examples can also be associated with different categories (e.g., categories 110, 120, and 130 of **FIG. 1**).

In some embodiments, data processing module 220 can train classifier 280 with corpus 295, and then determine whether the accuracy of classification by classifier 280, after the training, satisfies one or more predetermined requirements. If data processing module 220 determines that the accuracy does not satisfy the predetermined requirements, data processing module 220 can first determine a set of scores that reflects the data diversity of corpus 295. The data diversity may include, for example, a number of categories included in the corpus, and a measurement of similarities of examples within each of the categories in the corpus. If the ranking score is below a predetermined threshold, which can reflect that the corpus 295 does not have sufficient data diversity, which can affect the scope of input data that can be correctly classified by classifier 280, data processing module 220 can instruct data processing module 220 to obtain a second corpus 295 that includes more categories of data, and/or more diverse examples for one or more of the categories of data. Data processing module 220 can then provide the second corpus 295 to train classifier 280 again, and determine whether the accuracy of classification remains below the predetermined requirements, and can stop when the accuracy of classification satisfies the predetermined requirements. On the other hand, if the ranking score is above the predetermined threshold, yet the accuracy of classification remains below the predetermined requirements, data processing module 220 can also configure classifier 280 to use, for example, a different classification algorithm to perform the classification.

The data pre-processing module 230, similarity and frequency checking module 240, example ranking module 250, corpus ranking module 260, and updating module 270 of data processing module 220 can be configured to perform the aforementioned functions.

Data pre-processing module 230 can perform various pre-processing of the text data included in corpus 295 to extract information. The pre-processing may include, for example, identification and removal of regular expressions and special characters from the text, language processing, etc. As an illustrative example, referring to **FIG. 2B,** from the example 210A 'server x1 not responding due to network router failure at 5 pm,_ data pre-processing module 230 can identify and filter out expressions such as 'not responding,_ 'due to,_ 'and,_ and 'at,_ and extract information such as 'server x1,_ 'network router failure,_ and '5 pm_ from the text data. Data pre-processing module 230 can then provide the pre-processed text data to similarity and frequency checking module 240 for analysis.

Similarity and frequency checking module 240 can analyze the pre-processed text data from data pre-processing module 230. The analysis can include, for example, determining a measurement of similarity between each example and the rest of the examples of a particular category included in the pre-processed text data. As discussed above, the classification accuracy of a supervised classification algorithm can improve if a more diverse set of data is used to train the algorithm. The diversity of the data can improve if, for example, more dissimilar examples are included for each category, and/or more categories of data are included. Therefore, the similarity measurement can be used as an indicator of diversity of data.

Similarity measurements between the examples can take in different forms. Using the illustrative example above, similarity and frequency checking module 240 can map the extracted information 'server x1,_ 'network router failure,_ and '5 pm_ of example 210A to different dimensions of a first vector based on, for example, the semantic meaning of these information, the relevance of these information to a set of documents, etc. Moreover, similarity and frequency checking module 240 can also map information 'server x4,_ 'scheduled maintenance,_ and '1 am_ extracted from example 210B to a second vector based on the same criteria used for the generation of the first vector. Similarity and frequency checking module 240 may determine a similarity measurement between examples 210A and 210B by, for example, determining a cosine distance between the first and second vectors. Similarity and frequency checking module 240 may also determine a cosine distance between the first vector mapped to example 210A and other vectors mapped to other examples included in corpus 295. Besides cosine distance, other measurements can also be made, such as min hash.

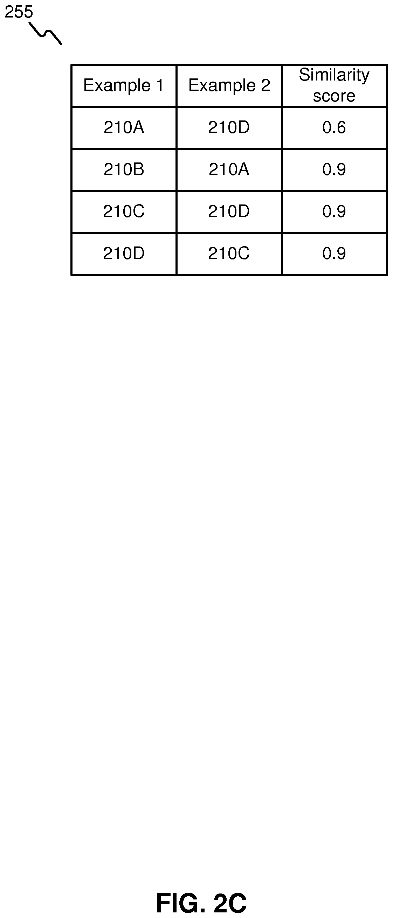

After determining the cosine distances, similarity and frequency checking module 240 may determine, for each example in corpus 295, another example that has the shortest cosine distance. Similarity and frequency checking module 240 may record, for each example, the example with the shortest cosine distance, and the cosine distance (or a similarity score determined based on the cosine distance). Table 255 of **FIG. 2C** illustrates an example of the record created by similarity and frequency checking module 240 based on examples 210A-210D of **FIG. 2B**. For example, similarity and frequency checking module 240 may determine that example 210A is most similar to example 210D based on, for example, both being directed to a network element (e.g., network router versus network gateway). Also, similarity and frequency checking module 240 may determine that example 210B is most similar to example 210A because it is directed to network failure, and the failure of example 210B occurs at the same time as example 210A. Further, similarity and frequency checking module 240 may also determine that examples 210C and 210D are the most similar to each other because they are directed to the same server, occur at the same time, but both include failure of the network gateway.

After creating table 255, similarity and frequency checking module 240 may create a similarity set including examples 210A to 210D. The similarity set can represent a set of examples that are more closely related to each other than, for example, examples that belong to different sets. As to be discussed below, a number of similarity sets with each categories of text data in a corpus, as well as a distribution of similarity scores within each of the number of similarity sets, can provide a measurement of the diversity of the data in the corpus.

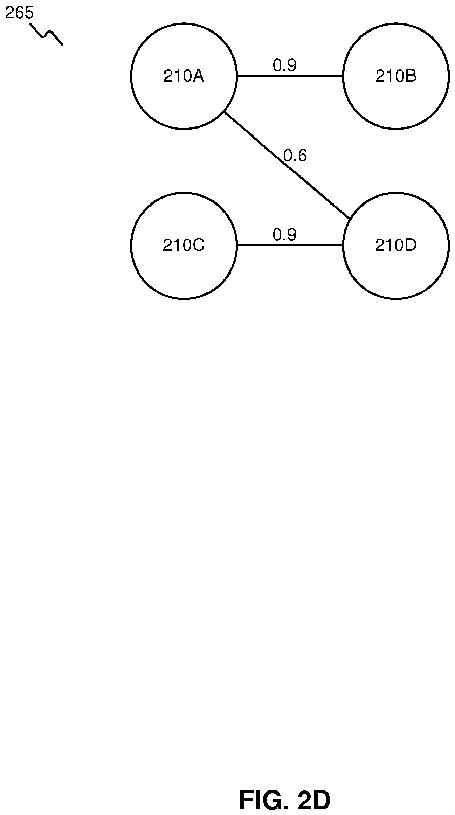

Similarity and frequency checking module 240 can create a similarity set by creating an undirected similarity graph based on the information stored in table 255. Reference is now made to **FIG. 2D,** which illustrates a similarity graph 265 created based on table 255. Each circle in similarity graph 265 is associated with one of examples 210A through 210D. A node associated with an example (e.g., example 210A) is connected, through an edge, to another node associated with another example with the highest similarity score according to table 255. The edge is associated with a weight according to the similarity score. For example, the edge between examples 210A and 210B is associated with a weight of 0.9, the edge between examples 210C and 210D is associated with a weight of 0.9, and the edge between examples 210A and 210D is associated with a weight of 0.6.

A similarity set can be created for each example of corpus 295 based on the similarity graph. For example, a similarity set of example 210A may include one or more examples that are connected directly (via one edge) to example 210A, and one or more examples that are connected indirectly (via multiple edges and nodes) to example 210A, in similarity graph 265. For example, a similarity set of example 210A may include one or more directly connected examples (e.g., examples 210B and 210D) and one or more indirectly connected examples (e.g., example 210C). Each similarity set of an example can also include a set of duple, with each duple including a connected example and the associated weigh. In a case where the example is indirectly connected, the associated weigh can be an average of the weighs of all the intervening edges. As an illustrative example, the similarity set of example 210A may include:

{(Example 210B, 0.9), (Example 210C, (0.6+0.9)/2), (Example 210D, 0.6)}

Similarity and frequency checking module 240 can provide the similarity set information (including the connected example and associated weight duple) to example ranking module 250 and corpus ranking module 260. Example ranking module 250 can determine a ranking score for every example in corpus 295 in a similarity set. As to be discussed below, the ranking score can be configured to reflect the value of a particular example in contributing to the diversity of the data included in the similarity set. The ranking score can be determined based on the following exemplary expression:

$$R_i = \cong / (S_i \times V_i) \qquad \text{(Expression 1)}$$

Here, $S_i$ is the maximum similarity score. $V_i$ is a size of the similarity set. $\cong$ can be a predetermined constant based on the corpus. Using the example of **FIG. 2D,** the maximum similarity score of 210A is 0.9, and the size of the similarity set can be 3. The ranking $R_i$ of an example $e_i$ can be inversely proportional to the example's maximum similarity score $S_i$ because an example with a high degree of similarity to other examples does not add diversity to the information already included in the set, and may reflect that there are lots of duplicate information. As an illustrative example, referring back to table 255, the similarity between examples 210C and 210D exceeds the similarity between examples 210A and 210D, which can indicate that example 210C (and/or example 210D) includes very similar information to example 210A, and add very little additional information to the set including example 210A. Therefore, examples 210C and 210D may be assigned a low ranking score.

Moreover, the ranking $R_i$ can also be inversely proportional to size of the example's similarity set $V_i$ because an example with a large similarity set also means information similar to those included in this example is heavily present in the corpus. Therefore, an example with a large similarity set (compared with others) may also be assigned a low ranking score.

Further, example ranking module 250 may also determine a distribution of the ranking scores of the examples included in a category. The distribution may also reflect a diversity of data included in the category. For example, if the ranking scores are evenly distributed (e.g., around a mean), example ranking module 250 may determine that the data included in the category is diverse, and dissimilar data are adequately represented in the category. On the other hand, if the ranking scores are not evenly distributed (e.g., exhibit a huge deviation among the ranking scores), example ranking module 250 may determine that the data included in the category is not diverse, and some of the data may be over-represented while some of the data may be under-represented. For example, referring to the example of **FIG. 1,** example ranking module 250 may determine that examples 140 are over-presented, while example 150 is under-presented.

On the other hand, corpus ranking module 260 can determine an overall corpus ranking score of corpus 295 based on the similarity sets included corpus 295. The overall corpus ranking score can be configured to reflect a diversity of data included in corpus 295. The overall corpus ranking score can be determined based on the following exemplary expression:

$$C = N_C \times N_S \times ij\,(1/S_S) \qquad \text{(Expression 2)}$$

Here, $N_c$ can refer to a number of categories included in corpus 295. $N_s$ can refer to a number of similarity sets $N_s$ determined by similarity and frequency checking module 240. $S_s$ can refer to an average similarity score for each similarity set s. The corpus ranking score C can be directly proportional to number of similarity sets $N_s$ because a large number of similarity sets per category can indicate good diversity of data in the corpus, which can provide high information content. The corpus ranking score C can also be inversely proportional to average similarity score $S_s$ because a high average similarity score can indicate that the examples included in the set are very similar to each other, and may provide relative little information content.

Corpus ranking module 260 may also generate a category ranking score according to the following exemplary expression:

$$C_R = N_S \times ij\,(1/S_S) \qquad \text{(Expression 3)}$$

In some embodiments, corpus ranking module 260 may generate a distribution of the category ranking scores for the categories included in the corpus. The distribution can also reflect diversity of data. For example, if one of the categories has a much lower ranking score than other categories, this may indicate that such a category has significantly worse data diversity than other categories, and more examples may be needed to improve the data diversity of that category.

In some embodiments, updating module 270 can be used to update corpus 295 and/or the configurations of classifier 280 based on a set of predetermined criteria. First, updating module 270 may determine a classification accuracy of classifier 280 trained using corpus 295. The classification accuracy can be determined based on, for example, a success rate at which classifier 280 generates a target classification that matches a predetermined classification for a set of input data. As an illustrative example, updating module 270 may determine the success rate at which a particular set of text data, predetermined to be associated with category 110, is correctly classified into such a category by classifier 280.

If updating module 270 determines that the success rate falls below a rate threshold, updating module 270 may determine, based on overall corpus ranking score of corpus 295 provided by corpus ranking module 260, as well as example ranking score for the similarity sets of corpus 295 provided by example ranking module 250, whether and how corpus 295 is to be updated. For example, if the overall corpus ranking score falls below a predetermined threshold, updating module 270 may determine, for example, that the corpus does not include a sufficient number of categories, a sufficient number of similarity sets, that the examples in these similarity sets lack diversity, or a combination of any of them. Moreover, based on the distribution of category ranking scores, updating module 270 may also determine that a particular category needs more diverse examples, and may instruct data acquisition module 210 to acquire examples that are dissimilar (e.g., with cosine distance exceeding a distance threshold) to those included in that particular category for a second corpus 295.

Further, if a particular example ranking score falls below a predetermined threshold, updating module 270 may also determine that this particular example is overrepresented, and may instruct data acquisition module 210 to acquire more examples that are dissimilar from that particular example for the second corpus 295.

On the other hand, if updating module 270 determines that both the example ranking scores and the overall corpus ranking scores exceed the predetermined thresholds, and that the scores are evenly distributed, both of which can indicate that corpus 295 has a diverse set of data and sufficient number of categories for a particular classification algorithm. If the classification accuracy remains below the rate threshold, updating module 270 may determine to change other configurations of classifier 280 to further improve the classification accuracy. For example, updating module 270 may update an attribute of the classification algorithm (e.g., change from a linear classifier to a quadratic classifier, change from a maximum likelihood classifier to a Bayesian classifier, etc.). Updating module 270 may also the rules of classification, and can update data pre-processing module 230 to change the information extracted from the text data.

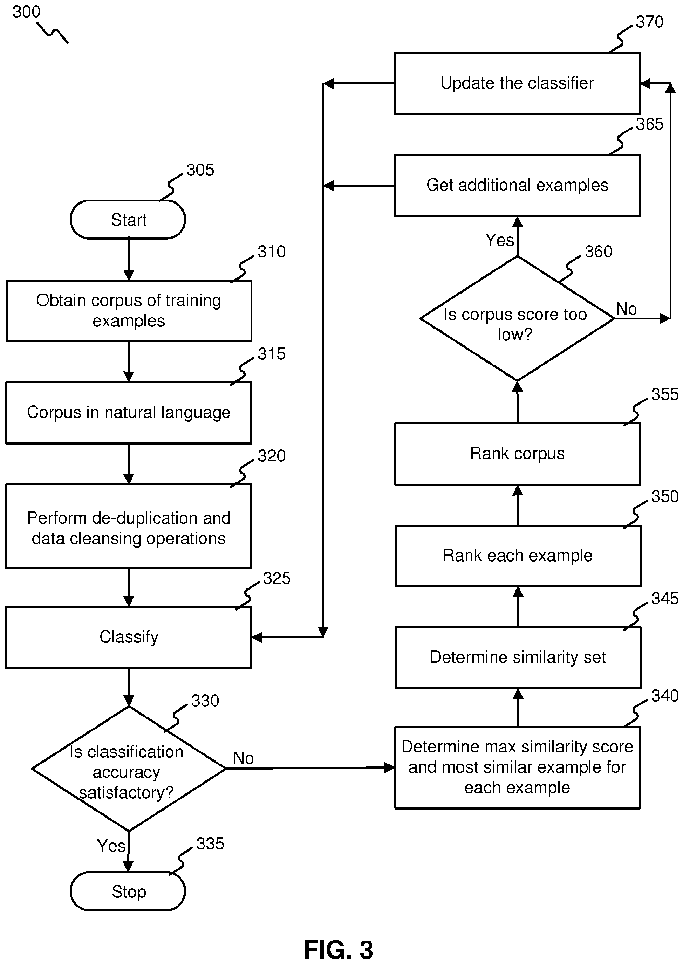

FIG. 3 is a flow diagram illustrating an exemplary method 300 for improving the data diversity a corpus for a supervised classification algorithm according to some embodiments of the present disclosure. Referring to **FIG. 3,** it will be readily appreciated by one of ordinary skill in the art that the illustrated method can be altered to modify the order of steps, delete steps or further include additional steps. In some embodiments, method 300 can be performed by a system including, for example, system 200 of **FIG. 2.**

After initial step 305, a corpus of training examples can be acquired in step 310. In some embodiments, corpus of training examples can be acquired by a data acquisition module including, for example, data acquisition module 210 of **FIG. 2.** Corpus of training examples can be acquired from a storage device. In some embodiments, corpus of training examples can be stored, for example, in database 290 of **FIG. 2.**

In step 315, the acquired corpus can be in natural language. The acquired corpus can be subject to deduplication and data cleansing operations in step 320. During step 320, special characters and noise like disclaimers can be removed. In some embodiments, operations like stemming, spell check/correction and lemmatization can be performed in step 320. The de-duplication and data cleansing operations of step 320 can be performed, for example, by data pre-processing module 230 of **FIG. 2.**

The pre-processed data from step 320 can be used to train a supervised classification algorithm. In step 325, the supervised classification algorithm uses a set of rules and parameters to classify the cleaned corpus. In some embodiments, the classification of step 325 can be performed, for example, by classifier 280 of **FIG. 2.**

The results of classification 325 can be checked in step 330. If the classification accuracy of step 325 is determined to be satisfactory, method 300 can end and the supervised classification algorithm can be used for data processing. If the classification accuracy of step 325 is determined to be not satisfactory, method 300 can begin process of determining health of the corpus of training examples with step 340.

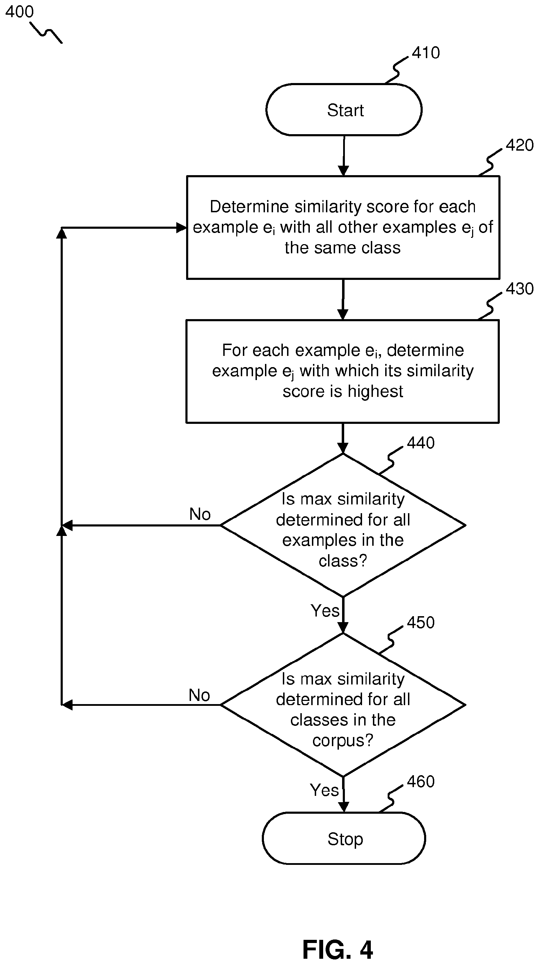

In step 340, a similarity score is determined between each example and every other example of the corpus. Based on the similarity score determinations, a most similar example and corresponding maximum similarity score can be determined for each example of the corpus. In some embodiments, the similarity score and maximum similarity determinations of step 340 can be performed, for example, by similarity and frequency checking module 240 of **FIG. 2.** Further details of similarity score and maximum similarity determinations are described with reference to **FIG. 4.**

**FIG. 4** is a flow diagram illustrating an exemplary method 400 for determining the example with maximum similarity and a maximum similarity score for each example of a corpus according to some embodiments of the present disclosure. Referring to **FIG. 4,** it will be readily appreciated by one of ordinary skill in the art that the illustrated method can be altered to modify the order of steps, delete steps or further include additional steps. In some embodiments, method 400 can be performed, for example, by similarity and frequency checking module 240 of **FIG. 2.**

After initial step 410, similarity scores can be determined in step 420 for each example $e_i$ of the corpus with every other example $e_j$ of the same category (as $e_i$) in the corpus. Similarity scores can be determined using, for example, a cosine similarity algorithm, or a minimum hash algorithm. In step 430, based on the similarity score determinations, a most similar example and corresponding maximum similarity score can be determined for example $e_i$. In step 440, it can be checked if similarity scores and maximum similarity are determined for every example of a category. If similarity checks are complete for every example of the category, method 400 proceeds to step 450. In step 450, it can be checked if similarity scores and maximum similarity are determined for every category of the corpus. If similarity checks are complete for every category for the corpus, method 400 can be ended.

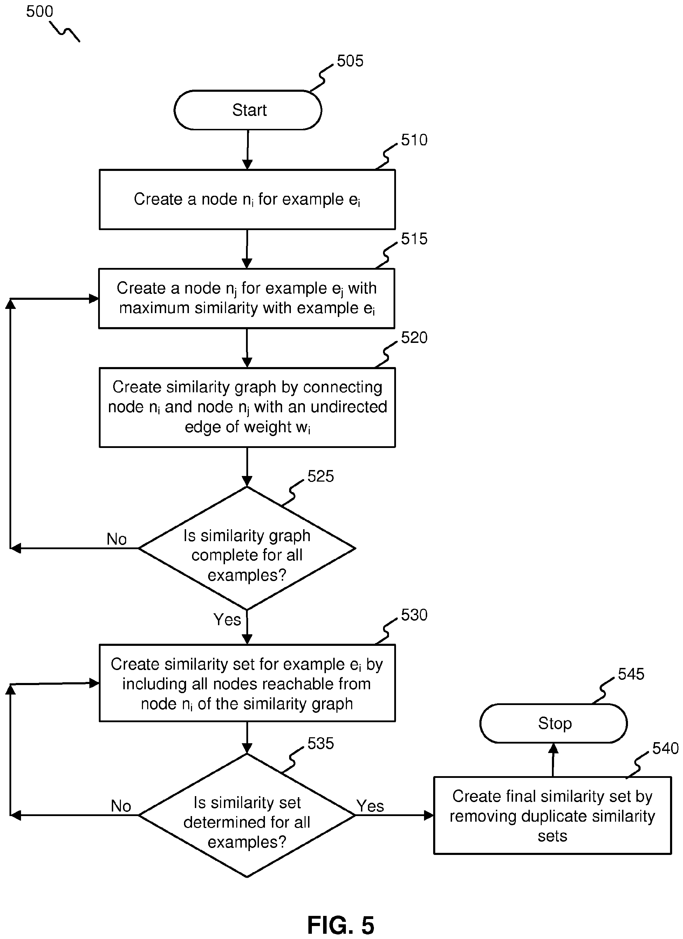

Referring back to **FIG. 3,** a similarity set can be determined using the most similar example and maximum similarity score determined in step 340. In step 345, a similarity set can be determined for every example of the corpus. Further details of similarity set determination are described with reference to **FIG. 5.**

A similarity graph is an undirected weighted graph and can be used to determine similarity sets for every example of the corpus. **FIG. 5** is a flow diagram illustrating an exemplary method 500 for creating a similarity graph for a corpus and determining similarity sets for every example of the corpus in accordance with some embodiments of the present disclosure. Referring to **FIG. 5,** it will be readily appreciated by one of ordinary skill in the art that the illustrated method can be altered to modify the order of steps, delete steps or further include additional steps.

After initial step 505, a similarity graph can be created by first creating a node $n_i$ for every example $e_i$ of the corpus (step 510). The nodes can be associated with, for examples, examples 210A through 210D of FIG. 2C.

In step 515, a node $n_j$ can be created for example $e_j$ with maximum similarity to example $e_i$. In step 520, nodes $n_i$ and $n_j$ can be connected with an undirected edge of weight $w_i$. In some embodiments, weight $w_i$ of edge connecting nodes $n_i$ and $n_j$ can correspond to the similarity score between examples $e_i$ and $e_j$ determined in step 340 of exemplary method 300.

In step 525, it is checked if all the examples in the corpus are represented as nodes on the similarity graph. Similarity graph for the corpus can be completed by repeating steps 515 and 520 for every example of the corpus. The resulting similarity graph may include, for example, similarity graph 265 of FIG. 2D. After the similarity graph is completed, a similarity set can be determined for every example of the corpus, as described above.

Referring back to **FIG. 5,** in step 535, it is checked if similarity sets have been determined for every example in the corpus. After similarity sets are determined for every example, duplicate similarity sets can be removed in step 540 in order to determine the final set of similarity sets for the corpus.

Referring back to **FIG. 3,** after determining similarity set in step 345, each example in the corpus can be ranked in step 350 based on a ranking score that reflects the example's degree of similarity to other examples and size of its similarity set. The ranking score can be determined based on, for example, Expression 1 as described above.

Referring back to **FIG. 3,** after determining example ranking scores in step 350, a corpus ranking score C can be determined in step 355 based on number of classes $N_c$, number of similarity sets $N_s$, and average similarity score $S_s$ of similarity set s. The corpus ranking score C can be determined based on, for example, Expression 2 as described above.

In step 360, the corpus ranking score and the example ranking scores can be compared with predetermined thresholds, and a determination can be made about updating the corpus. For example, if the overall corpus ranking score falls below a predetermined threshold, it may be determined that that the corpus does not include a sufficient number of categories, a sufficient number of similarity sets, that the examples in these similarity sets lack diversity, or a combination of any of them. Moreover, based on the distribution of category ranking scores, it may also be determined that a particular category needs more diverse examples. In this case, more examples that are dissimilar (e.g., with cosine distance exceeding a distance threshold) to those included in that particular category can be acquired.

Further, if a particular example ranking score falls below a predetermined threshold, it can also be determined that this particular example is overrepresented, and more examples that are dissimilar from that particular example can be acquired.

On the other hand, if the example ranking scores and the overall corpus ranking scores indicate that the corpus has a diverse set of data and sufficient number of categories for a particular classification algorithm, other configurations of the may be updated to further improve the classification accuracy, in step 370. For example, an attribute of the classification algorithm can be updated (e.g., change from a linear classifier to a quadratic classifier, change from a maximum likelihood classifier to a Bayesian classifier, etc.). Moreover, the rules of classification can also be updated in step 370.

Computer System

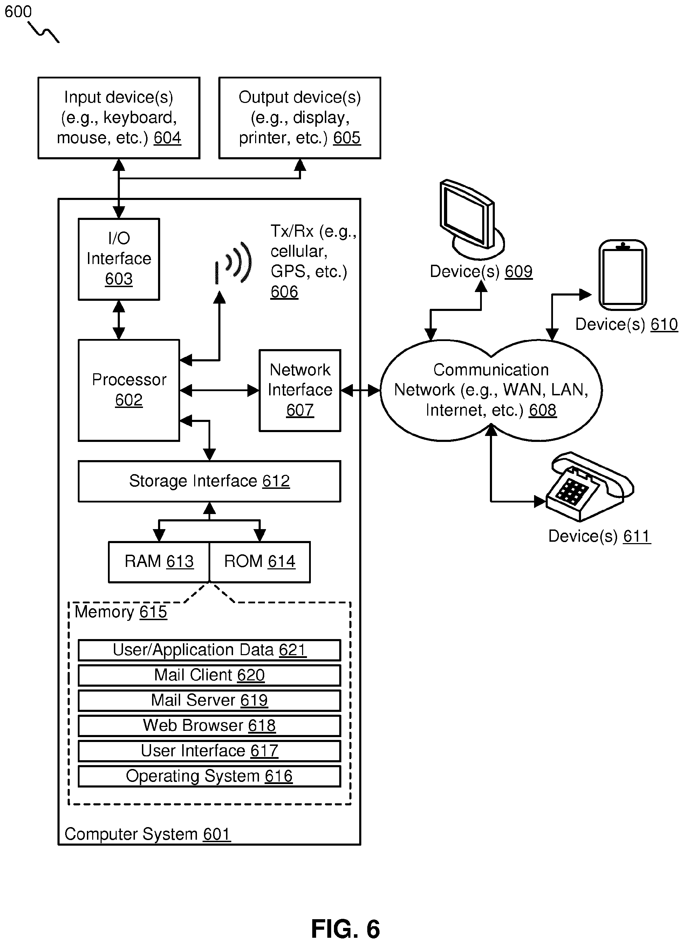

**FIG. 6** is a block diagram of an exemplary computer system for implementing embodiments consistent with the present disclosure. Variations of computer system 601 may be used for implementing the devices and systems disclosed herein. Computer system 601 may comprise a central processing unit ('CPU_ or 'processor_) 602. Processor 602 may comprise at least one data processor for executing program components for executing user- or system-generated requests. A user may include a person, a person using a device such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 602 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 602 may be disposed in communication with one or more input/output (I/O) devices via I/O interface 603. The I/O interface 603 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.11 a/b/g/n/x, Bluetooth, cellular (e.g., code-division multiple access (CDMA), high-speed packet access (HSPA+), global system for mobile communications (GSM), longterm evolution (LTE), WiMax, or the like), etc.

Using the I/O interface 603, the computer system 601 may communicate with one or more I/O devices. For example, the input device 604 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 605 may be a printer, fax machine, video display (e.g., cathode ray tube (CRT), liquid crystal display (LCD), light-emitting diode (LED), plasma, or the like), audio speaker, etc. In some embodiments, a transceiver 606 may be disposed in connection with the processor 602. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11 a/b/g/n, Bluetooth, FM, global positioning system (GPS), 2G/3G HSDPA/HSUPA communications, etc.

In some embodiments, the processor 602 may be disposed in communication with a communication network 608 via a network interface 607. The network interface 607 may communicate with the communication network 608. The network interface may employ connection protocols including, without limitation, direct connect, Ethernet (e.g., twisted pair 10/100/1000 Base T), transmission control protocol/internet protocol (TCP/IP), token ring, IEEE 802.11 a/b/g/n/x, etc. The communication network 608 may include, without limitation, a direct interconnection, local area network (LAN), wide area network (WAN), wireless network (e.g., using Wireless Application Protocol), the Internet, etc. Using the network interface 607 and the communication network 608, the computer system 601 may communicate with devices 610, 611, and 612. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like.

In some embodiments, the computer system 601 may itself embody one or more of these devices.

In some embodiments, the processor 602 may be disposed in communication with one or more memory devices (e.g., RAM 613, ROM 614, etc.) via a storage interface 612. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc. Variations of memory devices may be used for implementing, for example, the databases disclosed herein.

The memory devices may store a collection of program or database components, including, without limitation, an operating system 616, user interface application 617, web browser 618, mail server 619, mail client 620, user/application data 621 (e.g., any data variables or data records discussed in this disclosure), etc. The operating system 616 may facilitate resource management and operation of the computer system 601. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 617 may facilitate display, execution, interaction, manipulation, or operation of program components through textual or graphical facilities. For example, user interfaces may provide computer interaction interface elements on a display system operatively connected to the computer system 601, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 601 may implement a web browser 618 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 601 may implement a mail server 619 stored program component. The mail server may be an Internet mail server such as Microsoft Exchange, or the like. The mail server may utilize facilities such as ASP, ActiveX, ANSI C++/C#, Microsoft .NET, CGI scripts, Java, Java-Script, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 601 may implement a mail client 620 stored program component. The mail client may be a mail viewing application, such as Apple Mail, Microsoft Entourage, Microsoft Outlook, Mozilla Thunderbird, etc.

In some embodiments, computer system 601 may store user/application data 621, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of any computer or database component may be combined, consolidated, or distributed in any working combination.

The embodiments described herein provide methods and systems for improving accuracy of data processing. According to embodiments of the present disclosure, a system can determine a set of scores for a corpus of training data to be used to train a supervised-classification algorithm. The scores can reflect the diversity of examples included in the corpus, and/or a classification accuracy. If the scores are below predetermined thresholds, the system can also configure the supervised-classification algorithm, and/or to broaden the data diversity of examples in the corpus, until the predetermined thresholds are reached. As a result, the data diversity of examples of a corpus can be expanded, which can improve the classification accuracy of the supervised classification algorithm trained using the corpus.

The specification has described methods and systems for improving accuracy of data processing. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term 'computer-readable medium_ should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method of facilitating acquisition of information related to a set of text data, the method comprising:

   obtaining, by an application server, a first set of text data;
   determining, by the application server, a set of phrases from the first set of text data;
   determining, by the application server, a set of parameters of a classifier using the set of phrases, wherein the classifier is associated with a set of rules;
   classifying, by the application server, using the classifier with the determined set of parameters, the set of phrases into one or more classes;
   determining, by the application server, a level of accuracy of the classifying; and
   performing, by the application server, at least one of updating the set of parameters based on a second set of text data, or updating the set of rules in response to determining that the level of accuracy is below a predetermined threshold.

2. The method of claim 1, further comprising:

   determining a similarity set for each phrase of the set of phrases;
   determining a set of first ranking scores for a class of phrases of the set of phrases; and
   obtaining the second set of text data associated with the class of phrases for updating the set of parameters in response to determining that the deviations among the set of first ranking scores is above a predetermined threshold.

3. The method of claim 2, wherein a ranking score from the set of first ranking scores is inversely proportional to a size of the similarity set.

4. The method of claim 2 or 3, wherein determining a similarity set for each phrase of the set of phrases comprises determining a similarity graph that comprises a pair of nodes representing a pair of phrases of the set of phrases associated with a maximum similarity score; wherein the pair nodes are connected together with an edge associated with the maximum similarity score.

5. The method of claim 4, wherein the similarity set of a phrase comprises a set of phrases that are connected to the phrase in the similarity graph.

6. The method of any preceding claim, further comprising:

   determining a total number of the similarity sets of the set of phrases;
   determining a degree of similarity among each of the similarity sets;
   determining a total number of the one or more classes;
   determining based on the total number of the similarity sets, the total number of the one or more classes, and the degree of similarity, a second ranking score for the set of phrases; and
   determining to obtain the second set of text data associated with a class of phrases associated with a predetermined second ranking score.

7. The method of claim 6, wherein the second ranking score is directly proportional to the total number of the similarity sets and to the total number of the one or more classes and is inversely proportional to the degree of similarity.

8. A non-transitory computer readable storage medium having stored thereon a set of computer-executable instructions for causing a computer comprising one or more processors to perform steps comprising the method of any preceding claim.

9. An application server comprising:

   one or more memory units storing a set of instructions; and
   one or more hardware processors configured to execute the set of instructions to perform the method of any of claims 1 - 7.

100

110

**Server Failures**

- Server x1 not responding due to network failure
- Server x2 not responding due to network failure
- Server x3 not responding due to network failure
- Server x4 not responding due to network failure
- Server x1 not responding due to network failure
- Server x2 not responding due to network failure
- Server x4 not responding due to queuing delay

140

150

120

**Storage Failures**

- Storage x1 not responding due to disk error
- Storage x2 not responding due to disk error

130

**Processor Failures**

# FIG. 1

200

Data Acquisition Module — 210

Data Processing Module — 220

Data Pre-processing Module — 230

Similarity and Frequency Checking Module — 240

Example Ranking Module — 250

Corpus Ranking Module — 260

Corpus Updating Module — 270

Corpus of Examples — 295

Database — 290

Classifier — 280

**FIG. 2A**

295

Server Failures ⟋210

⟋210A
- Server x1 not responding due to network router failure at 5 pm
- Server x3 not responding due to network gateway and power failure at 5 pm ⟋—210C
- Server x3 not responding due to network gateway failure at 5 am ⟋ 210D
- Server x4 not responding due to network failure at 5 pm

210B

Storage Failures

⟋220
- Storage x1 not responding due to disk error
- Storage x2 not responding due to controller error

Processor Failures

⟋230
- Processor x1 not responding due to power failure
- Processor x2 not responding due to memory error

# FIG. 2B

255

| Example 1 | Example 2 | Similarity score |
|-----------|-----------|------------------|
| 210A | 210D | 0.6 |
| 210B | 210A | 0.9 |
| 210C | 210D | 0.9 |
| 210D | 210C | 0.9 |

# FIG. 2C

265

210A — 0.9 — 210B

0.6

210C — 0.9 — 210D

**FIG. 2D**

300

370

Update the classifier

305

Start

365

Get additional examples

310

Obtain corpus of training examples

Yes

360

315

Corpus in natural language

Is corpus score too low?

No

320

Perform de-duplication and data cleansing operations

355

Rank corpus

325

350

Classify

Rank each example

345

330

Determine similarity set

Is classification accuracy satisfactory?

No

340

Determine max similarity score and most similar example for each example

Yes

335

Stop

FIG. 3

400

410

Start

420

Determine similarity score for each example $e_i$ with all other examples $e_j$ of the same class

430

For each example $e_i$, determine example $e_j$ with which its similarity score is highest

440

No ← Is max similarity determined for all examples in the class?

Yes

450

No ← Is max similarity determined for all classes in the corpus?

Yes

460

Stop

**FIG. 4**

500

505

Start

510

Create a node $n_i$ for example $e_i$

515

Create a node $n_j$ for example $e_j$ with maximum similarity with example $e_i$

520

Create similarity graph by connecting node $n_i$ and node $n_j$ with an undirected edge of weight $w_i$

525

No ← Is similarity graph complete for all examples?

Yes

530

Create similarity set for example $e_i$ by including all nodes reachable from node $n_i$ of the similarity graph

535

No ← Is similarity set determined for all examples? → Yes

545

Stop

540

Create final similarity set by removing duplicate similarity sets

**FIG. 5**

600

Input device(s)
(e.g., keyboard,
mouse, etc.) 604

Output device(s)
(e.g., display,
printer, etc.) 605

I/O
Interface
603

Tx/Rx (e.g.,
cellular,
GPS, etc.)
606

Processor
602

Network
Interface
607

Storage Interface 612

RAM 613 | ROM 614

Memory 615

User/Application Data 621
Mail Client 620
Mail Server 619
Web Browser 618
User Interface 617
Operating System 616

Computer System 601

Device(s) 609

Device(s) 610

Communication
Network (e.g., WAN, LAN,
Internet, etc.) 608

Device(s) 611

**FIG. 6**

Europäisches
Patentamt

European
Patent Office

Office européen
des brevets

# EUROPEAN SEARCH REPORT

Application Number

EP 17 16 3404

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/309987 A1 (EPSTEIN MARK EDWARD [US] ET AL) 29 October 2015 (2015-10-29) * paragraphs [0003] - [0007]; figure 2 * ----- | 1-8 | INV. G06F17/30 |
| X | US 2003/055801 A1 (SUERMONDT HENRI JACQUES [US] ET AL) 20 March 2003 (2003-03-20) * abstract * * paragraphs [0005] - [0007], [0028], [0040], [0054], [0055] * ----- | 1-8 | |

TECHNICAL FIELDS
SEARCHED    (IPC)

G06F

The present search report has been drawn up for all claims

| Place of search | Date of completion of the search | Examiner |
|---|---|---|
| The Hague | 12 July 2017 | Hackelbusch, Richard |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 17 16 3404

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2017

| Patent document cited in search report | Publication date | Patent family member(s) | Publication date |
|---|---|---|---|
| US 2015309987 A1 | 29-10-2015 | NONE | |
| US 2003055801 A1 | 20-03-2003 | NONE | |

EPO FORM P0459

For more details about this annex : see Official Journal of the European Patent Office, No. 12/82